# EUROPÄISCHE PATENTSCHRIFT

(11) **EP 4 073 413 B1**
(45) Veröffentlichungstag und Bekanntmachung des Hinweises auf die Patenterteilung: **17.01.2024**
(21) Anmeldenummer: 20799657.0
(22) Anmeldetag: 26.10.2020
(51) Int. Cl.: B05B 9/01, F16L 27/08, F16L 57/02, B05B 15/656

(54) **VORRICHTUNG ZUM FÜHREN EINER FLEXIBLEN LEITUNG**
DEVICE FOR GUIDING A FLEXIBLE LINE
DISPOSITIF DE GUIDAGE D'UNE CONDUITE FLEXIBLE

(30) Priorität: 11.12.2019 DE 102019133971
(43) Veröffentlichungstag der Anmeldung: 19.10.2022
(73) Patentinhaber: Alfred Kärcher SE & Co. KG, 71364 Winnenden (DE)
(72) Erfinder: FIACK, Thomas, 71364 Winnenden (DE)
(74) Vertreter: Hoeger, Stellrecht & Partner Patentanwälte mbB
(86) Internationale Anmeldenummer: PCT/EP2020/080066
(87) Internationale Veröffentlichungsnummer: WO 2021/115674

(56) Entgegenhaltungen:
- EP-B1- 2 569 096
- WO-A1-2010/015089
- DE-A1- 3 426 575
- US-A- 5 358 352

## Beschreibung

Die Erfindung betrifft eine Vorrichtung geeignet zum Führen einer flexiblen Leitung, insbesondere eines Schlauchs.

Derartige Vorrichtungen sind geeignet, eine flexible Leitung, beispielsweise eine Elektroleitung in Form eines Elektrokabels oder auch einen Schlauch, insbesondere einen Saugschlauch oder einen zur Aufnahme von unter Druck gesetzter Reinigungsflüssigkeit geeigneten Hochdruckschlauch, zu führen, indem die flexible Leitung durch einen Führungskanal der Vorrichtung hindurchgeführt wird. So sind beispielsweise Vorrichtungen bekannt, die ein Führungsrohr aufweisen, durch das ein Schlauch hindurchgeführt werden kann und das mehrere teleskopartig ineinander schiebbare und ausziehbare Rohrabschnitte aufweist. Solche Vorrichtungen werden häufig auch als teleskopierbare Sprühlanzen bezeichnet. Eine derartige Sprühlanze ist beispielsweise aus der EP 2 569 096 B1 bekannt. Die Vorrichtungen bilden eine geradlinige Führung für die flexible Leitung aus, wobei die Leitung relativ zur Vorrichtung verschoben werden kann, sie erlauben aber keine verstellbare Richtungsänderung der Führung der flexiblen Leitung.

Aus der GB 2 549 812 B ist eine Vorrichtung bekannt, bei der eine Gelenkanordnung zum Einsatz kommt mit einem ersten Gelenkteil und einem relativ zum ersten Gelenkteil um eine Schwenkachse schwenkbaren zweiten Gelenkteil. Das erste Gelenkteil weist einen Einlass auf, an den ein Einlassschlauch fluiddicht angeschlossen werden kann, und das zweite Gelenkteil weist einen Auslass auf, an den ein Auslassschlauch fluiddicht angeschlossen werden kann. Zwischen dem Einlass und dem Auslass bildet die Gelenkanordnung einen Strömungskanal aus, so dass eine über den Einlassschlauch zugeführte Flüssigkeit durch die Gelenkanordnung hindurch zum Auslassschlauch strömen kann. Es ist allerdings nicht möglich, eine flexible Leitung durch die Gelenkanordnung hindurch zu führen.

Aus der US 5,358,352 A ist ein Drehgelenk für einen Tragarm bekannt, durch das eine flexible Leitung hindurchgeführt werden kann. Das Drehgelenk weist eine Gelenkanordnung mit einem ersten Gelenkteil und einem zweiten Gelenkteil auf. Das erste Gelenkteil bildet eine erste Gehäusehalbschale aus, und das zweite Gelenkteil bildet eine zweite Gehäusehalbschale aus. Die beiden Gelenkteile sind relativ zueinander um eine Gelenkachse verschwenkbar und bilden gemeinsam einen um die Gelenkachse umlaufenden Ringraum aus, durch den die flexible Leitung hindurchgeführt werden kann.

Aus der WO 2010/015089 A1 ist ein gelenkiger Ausleger für eine Säge- und Häckselvorrichtung bekannt, der ein Paar hohler und benachbarter Armsegmente aufweist, die über eine Gelenkanordnung miteinander in Fluidverbindung stehen. Die Gelenkanordnung weist zwei einander gegenüberliegende Platten auf, zwischen denen zwei gelenkig miteinander verbundene Stützglieder angeordnet sind. Die Armsegmente sind jeweils an einem Stützglied festgelegt und können mittels der Stützglieder um eine Schwenkachse relativ zueinander verschwenkt werden. Im Abstand zur Schwenkachse weist die Gelenkanordnung eine flexible Matte auf, die an einem Armsegment fixiert ist und entlang des anderen Armsegments bewegt werden kann. Zwischen den beiden Armsegmenten bildet die Gelenkanordnung eine Kammer aus, die von den einander gegenüberliegenden Platten, den Stützgliedern und der Matte begrenzt wird. Über die Kammer können unter der Wirkung einer Saugströmung Sägespäne von einem der beiden Armsegmente zum anderen Armsegment transportiert werden.

Aufgabe der vorliegenden Erfindung ist es, eine Vorrichtung der eingangs genannten Art derart weiterzubilden, dass sie eine verstellbare Richtungsänderung der Führung einer flexiblen Leitung, insbesondere eines Schlauchs, erlaubt, wobei die flexible Leitung mit geringem Kraftaufwand durch die Gelenkanordnung hindurchführbar ist.

Diese Aufgabe wird erfindungsgemäß gelöst durch eine Vorrichtung mit den Merkmalen von Patentanspruch 1.

Die erfindungsgemäße Vorrichtung weist eine Gelenkanordnung auf mit einem Führungskanal, durch den eine flexible Leitung, insbesondere ein Schlauch, beispielsweise ein Saugschlauch oder ein zur Aufnahme von unter Druck gesetzter Reinigungsflüssigkeit geeigneter Hochdruckschlauch, hindurchgeführt werden kann. Es kann jedoch auch vorgesehen sein, dass der Führungskanal selbst eine Leitung ausbildet für ein flüssiges oder gasförmiges Medium, das durch den Führungskanal hindurchgeführt wird.

Die Gelenkanordnung weist ein erstes Gelenkteil und ein zweites Gelenkteil auf, die relativ zueinander um eine Gelenkachse schwenkbar sind. Die beiden Gelenkteile bilden den Führungskanal aus. Die flexible Leitung lässt sich mit geringem Kraftaufwand durch die Gelenkanordnung hindurchführen, da sie im Führungskanal frei verschiebbar ist.

Der Führungskanal weist einen Einlassabschnitt, einen Auslassabschnitt und einen längenveränderlichen Verbindungsabschnitt auf. Der Einlassabschnitt ist über den Verbindungsabschnitt mit dem Auslassabschnitt verbunden. Durch Verschwenken der Gelenkteile kann die Führungsrichtung für die flexible Leitung verstellt werden. Da der Verbindungsabschnitt auf seiner der Gelenkachse abgewandten Außenseite von einem verformbaren Abdeckteil abgedeckt ist, das zumindest an einem der beiden Gelenkteile beweglich gelagert ist, ist der Führungskanal außenseitig unabhängig von der Schwenkstellung der beiden Gelenkteile immer geschlossen. Die flexible Leitung kann daher bei einer Richtungsänderung der Führung nicht aus dem Verbindungsabschnitt herausrutschen, vielmehr wird die flexible Leitung bei allen Schwenkwinkeln zuverlässig geführt und ist vor von außen einwirkenden Beschädigungen geschützt.

Das Abdeckteil kann beispielsweise elastisch verformbar ausgestaltet sein. Es kann auch vorgesehen sein, dass das Abdeckteil mehrere gelenkig miteinander verbundene Abdeckelemente aufweist.

Der Verbindungsabschnitt erstreckt sich vom Eingangsabschnitt bis zum Ausgangsabschnitt, so dass die Länge des Verbindungsabschnitts davon abhängt, in welchem Winkel der Auslassabschnitt zum Einlassabschnitt ausgerichtet ist. Nimmt der Auslassabschnitt einen spitzen Winkel zum Einlassabschnitt ein, so weist der Verbindungsabschnitt eine größere Länge auf, als wenn der Auslassabschnitt einen stumpfen Winkel zum Einlassabschnitt einnimmt. Um diese Längenänderung des Verbindungsabschnitts zu berücksichtigen, ist das bezogen auf die Gelenkachse an der Außenseite des Verbindungsabschnitts angeordnete Abdeckteil zumindest an einem der beiden Gelenkteile bewegbar gelagert. Die bewegbare Lagerung erlaubt es dem Abdeckteil, sich in das entsprechende Gelenkteil hineinzubewegen, wenn die Länge des Verbindungsabschnitts verkleinert wird, und sich aus dem entsprechenden Gelenkteil herauszubewegen, wenn die Länge des Verbindungsabschnitts vergrößert wird.

Das Abdeckteil kann an beiden Gelenkteilen bewegbar gelagert sein. Alternativ kann vorgesehen sein, dass das Abdeckteil nur an einem der beiden Gelenkteile bewegbar und am anderen der beiden Gelenkteile ortsfest gelagert ist.

Gemäß der Erfindung weist das erste Gelenkteil einen Einlasskörper und einen Verbindungskörper auf, wobei der Einlasskörper den Einlassabschnitt ausbildet und wobei der Verbindungskörper den Verbindungsabschnitt des Führungskanals ausbildet.

Das zweite Gelenkteil weist gemäß der Erfindung einen Auslasskörper und einen Gehäusekörper auf, wobei der Auslasskörper den Auslassabschnitt des Führungskanals ausbildet und wobei der Gehäusekörper ein Gehäuse ausbildet, in dem der Verbindungskörper um die Gelenkachse schwenkbar gelagert ist.

Die erfindungsgemäße Vorrichtung ist unter anderem für Fälle geeignet, in denen ein aus dem Auslassabschnitt der Gelenkanordnung herausragender Leitungsabschnitt der flexiblen Leitung in seiner Länge verändert werden soll. Soll die Länge dieses Leitungsabschnitts vergrößert werden, so kann eine gewünschte Länge der flexiblen Leitung aus der Gelenkanordnung herausgezogen werden. Soll die Länge dieses Leitungsabschnitts verringert werden, so kann die flexible Leitung in die Gelenkanordnung eingeschoben werden. Eine derartige Längenveränderung des aus dem Auslassabschnitt herausragenden Leitungsabschnitts kann beispielsweise auftreten, wenn an den Auslassabschnitt ein in seiner Länge veränderliches Führungsrohr angeschlossen ist, durch das die flexible Leitung hindurchgeführt ist. Das längenveränderliche Führungsrohr kann mehrere teleskopartig ineinander schiebbare und ausziehbare Rohrabschnitte aufweisen, um die Länge des Führungsrohrs zu verändern. Werden die Rohrabschnitte auseinandergezogen, so vergrößert sich die Länge des aus dem Auslassabschnitt der Gelenkanordnung herausragenden Leitungsabschnitts, indem die flexible Leitung durch die Gelenkanordnung hindurchgezogen wird. Sollen die beiden Rohrabschnitte ineinandergeschoben werden, so verringert sich die Länge des aus dem Auslassabschnitt der Gelenkanordnung herausragenden Leitungsabschnitts, indem dieser in die Gelenkanordnung eingeschoben wird.

Bevorzugt ist der Verbindungsabschnitt bezogen auf die Gelenkachse kreisbogenförmig ausgestaltet. Dies erlaubt eine kreisbogenförmige Führung der flexiblen Leitung um die Gelenkachse. Die Gelenkachse ist außerhalb des Führungskanals angeordnet. Die flexible Leitung kann durch die Gelenkanordnung hindurchgeführt werden, wobei unabhängig vom Schwenkwinkel, den die beiden Gelenkteile zueinander einnehmen, die Einhaltung eines Mindestbiegeradius der flexiblen Leitung sichergestellt ist. Eine Beschädigung der flexiblen Leitung beim Schwenken der beiden Gelenkteile relativ zueinander kann dadurch vermieden werden.

Wie bereits erwähnt, kann die flexible Leitung relativ zur Vorrichtung verschoben werden. Um Reibungsverluste beim Verschieben der flexiblen Leitung besonders gering zu halten, ist es von Vorteil, wenn der Einlassabschnitt und/oder der Auslassabschnitt bezogen auf die Gelenkachse tangential zum Verbindungsabschnitt ausgerichtet sind. Eine derartige Ausrichtung ist insbesondere dann von Vorteil, wenn der Verbindungsabschnitt kreisbogenförmig ausgestaltet ist.

Bei einer bevorzugten Ausgestaltung der Erfindung sind die beiden Gelenkteile in mehreren Schwenkstellungen lösbar arretierbar. Dies erlaubt es, die beiden Gelenkteile in einer gewünschten Schwenkstellung zu fixieren. Günstig ist es, wenn die beiden Gelenkteile in allen Schwenkstellungen, die sie zueinander einnehmen können, arretierbar sind.

Bevorzugt ist das verformbare Abdeckteil streifenförmig ausgestaltet. Es kann beispielsweise von einem elastisch verformbaren Blechstreifen gebildet werden oder beispielsweise von einem elastisch verformbaren und streifenförmig ausgestalteten Kunststoffteil.

Das Abdeckteil weist einen ersten Endabschnitt auf und einen dem ersten Endabschnitt abgewandten zweiten Endabschnitt. Günstig ist es, wenn der erste Endabschnitt an einem der beiden Gelenkteile, beispielsweise am ersten Gelenkteil, festgelegt ist, und wenn der zweite Endabschnitt in einer Abdeckaufnahme des anderen der beiden Gelenkteile, beispielsweise des zweiten Gelenkteils, verschiebbar gelagert ist. Werden die beiden Gelenkteile derart zueinander verschwenkt, dass der Auslassabschnitt ausgehend von einem spitzen Winkel in einen stumpfen Winkel zum Einlassabschnitt ausgerichtet wird, so kann der zweite Endabschnitt des Abdeckteils zunehmend von der Abdeckaufnahme aufgenommen werden, in der der zweite Endabschnitt verschiebbar gelagert ist.

Günstigerweise ist der Einlasskörper einstückig mit dem Verbindungskörper verbunden. Bei einer derartigen Ausgestaltung bilden der Einlasskörper und der Verbindungskörper gemeinsam ein einteiliges Bauelement aus. Dieses Bauelement kann beispielsweise aus einem Kunststoffmaterial bestehen.

Von Vorteil ist es, wenn der Verbindungskörper ringförmig ausgestaltet und konzentrisch zur Gelenkachse ausgerichtet ist. Der Verbindungskörper kann sich insbesondere kreisförmig um die Gelenkachse herum erstrecken.

Bevorzugt weist der Verbindungskörper einen Ringkanal auf, der an der der Gelenkachse abgewandten Außenseite des Verbindungskörpers angeordnet ist, wobei ein kreisbogenförmiger Kanalbereich des Ringkanals den Verbindungskanal ausbildet. Der kreisbogenförmige Kanalbereich verbindet den Einlassabschnitt mit dem Auslassabschnitt. Der Einlassabschnitt mündet - bevorzugt in tangentialer Richtung - in den Kanalbereich und der Auslassabschnitt schließt sich - bevorzugt in tangentialer Richtung - an den Kanalbereich an.

Der Ringkanal ist vorzugsweise auf seiner der Gelenkachse abgewandten Seite offen.

Der Ringkanal kann im Querschnitt beispielsweise U-förmig ausgestaltet sein.

Von Vorteil ist es, wenn der Gehäusekörper ein erstes Gehäuseteil und ein zweites Gehäuseteil aufweist, die den Verbindungskörper zwischen sich aufnehmen.

Eine kostengünstige Herstellung und Montage des Gehäusekörpers wird bei einer vorteilhaften Ausgestaltung der Erfindung dadurch erzielt, dass die beiden Gehäuseteile jeweils eine Halbschale des Gehäuses ausbilden.

Bevorzugt sind die beiden Gehäuseteile ringförmig ausgestaltet. Insbesondere kann vorgesehen sein, dass sich die beiden Gehäuseteile jeweils kreisringförmig um die Gelenkachse herum erstrecken.

Von Vorteil ist es, wenn die beiden Gehäuseteile konzentrisch zur Gelenkachse ausgerichtet sind.

Günstigerweise sind die beiden Gehäuseteile lösbar miteinander verbindbar, beispielsweise miteinander verschraubbar.

Bei einer bevorzugten Ausgestaltung der Erfindung ist das Abdeckteil zwischen den beiden Gehäuseteilen angeordnet.

Insbesondere kann vorgesehen sein, dass die beiden Gehäusesteile in Kombination mit dem Verbindungskörper eine Führung für das Abdeckteil ausbilden.

Das Abdeckteil kann in der von den beiden Gehäuseteilen und dem Verbindungskörper gebildeten Führung verschiebbar gelagert sein.

Wie eingangs erwähnt, können die beiden Gelenkteile in mehreren Schwenkstellungen relativ zueinander lösbar arretiert werden. Hierbei ist es von Vorteil, wenn der Verbindungskörper des ersten Gelenkteils erste Arretierungselemente aufweist und wenn der Gehäusekörper des zweiten Gelenkteils zweite Arretierungselemente aufweist, wobei der Verbindungskörper relativ zum Gehäusekörper zwischen einer Arretierungsstellung und einer Freigabestellung hin und her bewegbar ist, wobei die ersten Arretierungselemente in der Arretierungsstellung des Verbindungskörpers mit den zweiten Arretierungselementen in Eingriff stehen, insbesondere einen Formschluss mit den zweiten Arretierungselementen ausbilden, und wenn die ersten Arretierungselemente in der Freigabestellung des Verbindungskörpers zu den zweiten Arretierungselementen beabstandet sind. Die ersten Arretierungselemente stehen in der Arretierungsstellung des Verbindungskörpers mit den zweiten Arretierungselementen in Eingriff und wirken bevorzugt mit den zweiten Arretierungselementen formschlüssig zusammen, um die beiden Gelenkteile in einer gewünschten Schwenkstellung zu arretieren. Soll die Arretierung gelöst werden, so kann hierzu der Eingriff der ersten Arretierungselemente in die zweiten Arretierungselemente gelöst werden. Zu diesem Zweck kann der Verbindungskörper in die Freigabestellung bewegt werden, in der die ersten Arretierungselemente einen Abstand zu den zweiten Arretierungselementen einnehmen.

Bevorzugt ist der Verbindungskörper mittels eines Federelements in seine Arretierungsstellung vorgespannt. Eine Bewegung des Verbindungskörpers aus der Arretierungsstellung in die Freigabestellung erfolgt bei einer derartigen Ausgestaltung entgegen einer vom Federelement ausgeübten Federkraft.

Das Federelement kann beispielsweise mit einem ersten Federende am Gehäusekörper und mit einem zweiten Federende am Verbindungskörper festgelegt sein.

Das Federelement kann zum Beispiel in Form einer Schraubenfeder ausgestaltet sein.

Der Verbindungskörper ist bei einer bevorzugten Ausgestaltung der Erfindung bezogen auf die Gelenkachse in axialer Richtung zwischen der Arretierungsstellung und der Freigabestellung hin und her bewegbar.

Eine besonders einfache Handhabung der Vorrichtung wird bei einer bevorzugten Ausgestaltung der Erfindung dadurch gelöst, dass die Vorrichtung ein Steuerteil aufweist und der Verbindungskörper durch Betätigen des Steuerteils in axialer Richtung bewegbar ist.

Beispielsweise kann vorgesehen sein, dass eine Betätigung des Steuerteils in einer ersten Betätigungsrichtung zur Folge hat, dass der Verbindungskörper ausgehend von seiner Arretierungsstellung in seine Freigabestellung bewegt wird, und dass eine Betätigung des Steuerteils in einer zweiten Betätigungsrichtung zur Folge hat, dass der Verbindungskörper aus seiner Freigabestellung in seine Arretierungsstellung bewegt wird.

Um die Handhabung der Vorrichtung zu erleichtern, ist das Steuerteil bei einer vorteilhaften Ausführungsform der Erfindung relativ zum Gehäusekörper um die Gelenkachse drehbar und bezogen auf die Gelenkachse in axialer Richtung bewegbar.

Bevorzugt weist das Steuerteil zwei koaxial zur Gelenkachse ausgerichtete ringförmige Steuerglieder auf, die den Verbindungskörper zwischen sich aufnehmen und die an ihren dem Verbindungskörper abgewandten Seiten Steuerelemente aufweisen, wobei die Steuerelemente zur Erzielung einer gemeinsamen axialen Bewegung des Steuerteils und des Verbindungskörpers mit am Gehäusekörper angeordneten Steuerkurven zusammenwirken. Beim Verdrehen des Steuerteils relativ zum Gehäusekörper um die Gelenkachse gleiten die Steuerelemente an den Steuerkurven des Gehäusekörpers entlang. Die Steuerkurven weisen bevorzugt Steuerflanken auf, die eine bezogen auf die Gelenkachse axial ausgerichtete Richtungskomponente aufweisen, so dass das Steuerteil bei einer Drehbewegung relativ zum Gehäusekörper auch in axialer Richtung bewegt wird, wobei die Richtung der Axialbewegung abhängig ist von der Drehrichtung des Steuerteils. Die axiale Bewegung des Steuerteils wird auf den Verbindungskörper übertragen, den die beiden Steuerglieder des Steuerteils zwischen sich aufnehmen.

Die beiden Steuerglieder sind günstigerweise über einen vom Benutzer ergreifbaren Steuerhebel miteinander verbunden. Um das Steuerteil um die Gelenkachse zu verdrehen, kann der Benutzer den Steuerhebel ergreifen.

Bevorzugt ist an den Einlassabschnitt der Gelenkanordnung ein Führungsrohr angeschlossen, durch das die flexible Leitung hindurchführbar ist und das zumindest zwei teleskopartig ineinander schiebbare und ausziehbare Rohrabschnitte aufweist. Dies erlaubt es, die flexible Leitung, insbesondere einen Schlauch, beispielsweise einen zur Aufnahme von unter Druck gesetzter Reinigungsflüssigkeit geeigneten Hochdruckschlauch, auch außerhalb der Gelenkanordnung auf einfache Weise zu führen. Hierzu kann die flexible Leitung durch ein längenveränderliches Führungsrohr hindurchgeführt werden, das an den Einlassabschnitt der Gelenkanordnung angeschlossen ist und zwei teleskopartig ineinander schiebbare und ausziehbare Rohrabschnitte aufweist.

An dem an den Einlassabschnitt angeschlossenen Führungsrohr ist bei einer bevorzugten Ausgestaltung der Erfindung eine Pistolenhalterung angeordnet zum Halten einer Spritzpistole, an die ein Ende der flexiblen Leitung anschließbar ist. Derartige Spritzpistolen sind dem Fachmann an sich bekannt. Sie weisen einen Pistoleneinlass auf, an den eine Versorgungsleitung angeschlossen werden kann, und einen Pistolenauslass. Zwischen dem Pistoleneinlass und dem Pistolenauslass ist ein vom Benutzer betätigbares Ventil angeordnet, mit dessen Hilfe eine Strömungsverbindung zwischen dem Pistoleneinlass und dem Pistolenauslass wahlweise hergestellt und unterbrochen werden kann. An den Pistolenauslass kann ein Ende der bevorzugt als Schlauch ausgestalteten flexiblen Leitung angeschlossen werden, und die Spritzpistole kann an der Pistolenhalterung festgelegt werden, die an dem an den Einlassabschnitt der Gelenkanordnung angeschlossenen Führungsrohr angeordnet ist. Dies erlaubt es, den an den Pistolenauslass der Spritzpistole angeschlossenen Schlauch über die erfindungsgemäße Vorrichtung beispielsweise zu einem Reinigungskopf zu führen, mit dessen Hilfe eine Fläche, insbesondere eine Fassadenfläche, gereinigt werden kann.

Bevorzugt ist an den Auslassabschnitt der Gelenkanordnung ein Führungsrohr angeschlossen, durch das die flexible Leitung hindurchführbar ist und das zumindest zwei teleskopartig ineinander schiebbare und ausziehbare Rohrabschnitte aufweist. Dies erlaubt es, die flexible Leitung, insbesondere einen Schlauch, beispielsweise einen zur Aufnahme von unter Druck gesetzter Reinigungsflüssigkeit geeigneten Hochdruckschlauch, in einem sich an den Auslassabschnitt anschließenden Bereich auf einfache Weise zu führen. Hierzu kann die flexible Leitung durch ein längenveränderliches Führungsrohr hindurchgeführt werden, das an den Auslassabschnitt der Gelenkanordnung angeschlossen ist und zwei teleskopartig ineinander schiebbare und ausziehbare Rohrabschnitte aufweist.

An das an den Auslassabschnitt angeschlossene Führungsrohr kann beispielsweise ein Reinigungskopf zum Reinigen einer Fläche angeschlossen sein, insbesondere ein Reinigungskopf zum Reinigen einer Gebäudefassade, wobei dem Reinigungskopf über einen Schlauch, der durch den Führungskanal der Gelenkanordnung und das Führungsrohr hindurchgeführt ist, unter Druck stehende Reinigungsflüssigkeit zuführbar ist.

Die nachfolgende Beschreibung einer vorteilhaften Ausführungsform der Erfindung dient im Zusammenhang mit der Zeichnung der näheren Erläuterung. Es zeigen:
- Figur 1:: eine perspektivische Darstellung einer Vorrichtung zum Führen einer flexiblen Leitung mit zwei Gelenkteilen, an die jeweils ein längenveränderliches Führungsrohr angeschlossen ist, wobei die Gelenkteile eine erste Schwenkstellung einnehmen und die Führungsrohre ineinandergeschoben sind;
- Figur 2:: eine perspektivische Darstellung der Vorrichtung aus Figur 1, wobei die Gelenkteile eine zweite Schwenkstellung einnehmen;
- Figur 3:: eine perspektivische Darstellung der Vorrichtung aus Figur 1, wobei die Gelenkteile eine dritte Schwenkstellung einnehmen und die beiden Führungsrohre auseinandergezogen sind;
- Figur 4:: eine perspektivische Darstellung einer Gelenkanordnung der Vorrichtung aus Figur 1 in Richtung von Pfeil X aus Figur 1 nach Art einer Explosionszeichnung;
- Figur 5:: eine perspektivische Darstellung der Gelenkanordnung aus Figur 1 in Richtung von Pfeil Y aus Figur 1 nach Art einer Explosionszeichnung;
- Figur 6:: eine perspektivische Darstellung des ersten Gelenkteils aus Figur 1;
- Figur 7:: eine perspektivische Darstellung eines Steuerteils der Vorrichtung aus Figur 1;
- Figur 8:: eine Seitenansicht der Gelenkanordnung aus Figur 5, wobei ein zweites Gehäuseteil der Gelenkanordnung ausgeblendet ist;

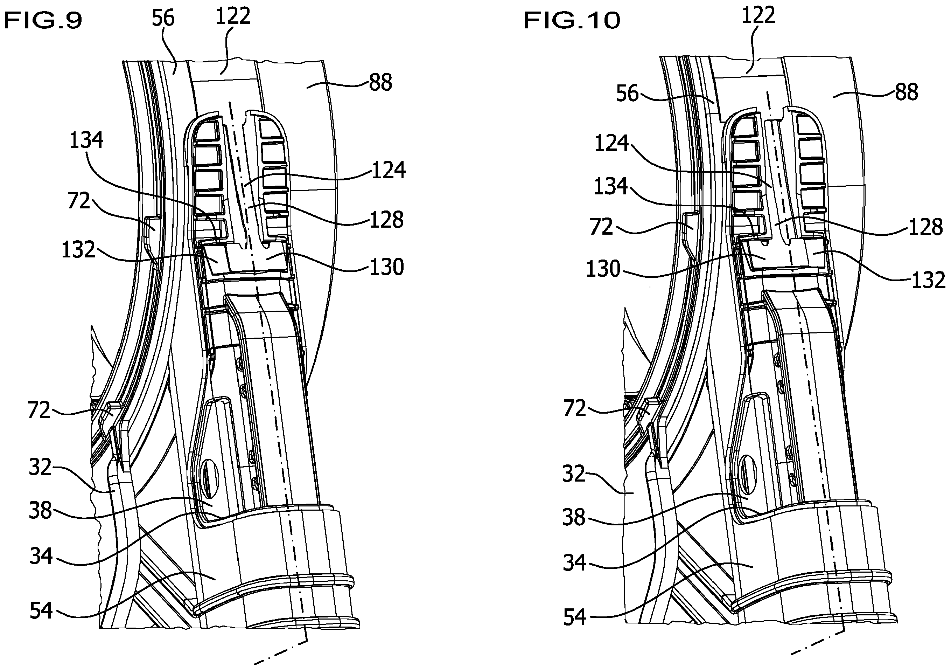

- Figur 9:: eine perspektivische Teildarstellung der Gelenkanordnung, wobei ein Deckel des ersten Gelenkteils und ein zweites Gehäuseteil des zweiten Gelenkteils ausgeblendet sind und ein Verbindungskörper eine Arretierungsstellung einnimmt;
- Figur 10:: eine perspektivische Teildarstellung entsprechend Figur 7, wobei der Verbindungskörper eine Freigabestellung einnimmt;
- Figur 11:: eine Schnittansicht der Gelenkanordnung längs der Linie 11-11 aus Figur 8, wobei der Verbindungskörper eine Arretierungsstellung einnimmt;
- Figur 12:: eine Schnittansicht der Gelenkanordnung entsprechend Figur 11, wobei der Verbindungskörper eine Freigabestellung einnimmt.

In der Zeichnung ist eine bevorzugte Ausführungsform einer erfindungsgemäßen Vorrichtung zum Führen einer flexiblen Leitung schematisch dargestellt. Die Vorrichtung ist insgesamt mit dem Bezugszeichen 10 belegt. Als flexible Leitung kann beispielsweise ein Saugschlauch zum Einsatz kommen, wie er insbesondere bei Saugreinigungsgeräten Verwendung findet. Im dargestellten Ausführungsbeispiel kommt ein Schlauch 12 zum Einsatz, mit dessen Hilfe einem Reinigungskopf 14, der an die Vorrichtung 10 angeschlossen ist, unter Druck gesetzte Reinigungsflüssigkeit zugeführt werden kann. Der Schlauch 12 erstreckt sich von einem Pistolenauslass 16 einer an einer Pistolenhalterung 18 der Vorrichtung 10 gehaltenen Spritzpistole 20 durch die Vorrichtung 10 hindurch bis zum Reinigungskopf 14. Der Reinigungskopf 14 und die Spritzpistole 20 sind nicht Teil der Vorrichtung 10.

Der Einsatzzweck der Vorrichtung 10 ist jedoch nicht auf das Führen eines Schlauchs beschränkt, vielmehr könnte mittels der Vorrichtung 10 auch eine andere flexible Leitung geführt werden, beispielsweise eine Elektroleitung.

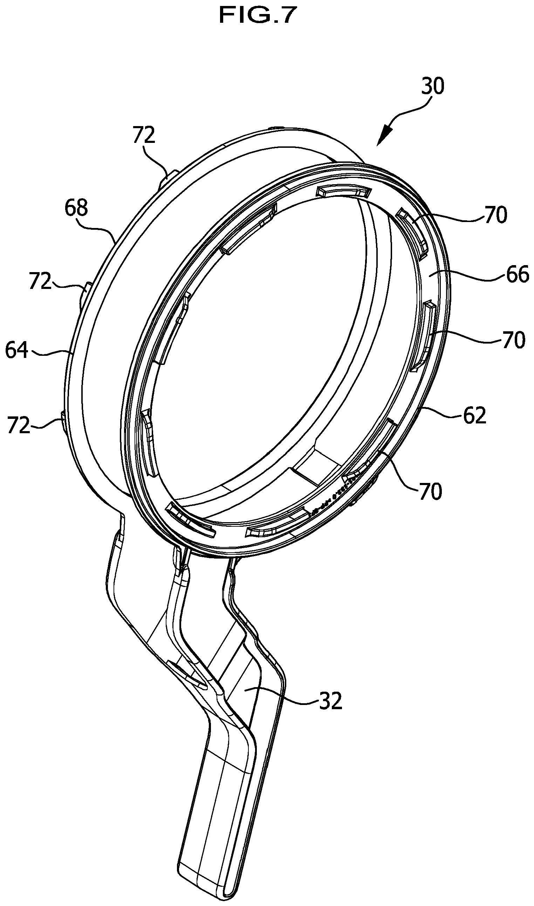

Die Vorrichtung 10 weist eine Gelenkanordnung 22 auf mit einem ersten Gelenkteil 24 und einem zweiten Gelenkteil 26. Die beiden Gelenkteile 24, 26 können relativ zueinander um eine Gelenkachse 28 verschwenkt und in einer gewünschten Schwenkstellung arretiert werden. Zur Arretierung der beiden Gelenkteile 24, 26 weist die Gelenkanordnung 22 ein insbesondere aus Figur 7 ersichtliches Steuerteil 30 auf mit einem Steuerhebel 32, den der Benutzer mit der Hand ergreifen kann.

Das erste Gelenkteil 24 weist einen Einlassabschnitt 34 auf, an den ein erstes längenveränderliches Führungsrohr 36 angeschlossen ist. An dem der Gelenkanordnung 22 abgewandten freien Ende des ersten Führungsrohrs 36 ist die bereits erwähnte Pistolenhalterung 18 angeordnet.

Das erste Führungsrohr 36 weist zwei teleskopartig ineinander schiebbare und ausziehbare Rohrabschnitte 38, 40 auf, die mittels einer manuell lösbaren Sperreinrichtung 42 aneinander festgelegt werden können.

Das zweite Gelenkteil 26 weist einen Auslassabschnitt 44 auf, an den ein zweites längenveränderliches Führungsrohr 46 angeschlossen ist. An das der Gelenkanordnung 22 abgewandte freie Ende des zweiten Führungsrohrs 46 ist der bereits erwähnte Reinigungskopf 14 angeschlossen.

Das zweite Führungsrohr 46 weist zwei teleskopartig ineinander schiebbare und auseinanderziehbare Rohrabschnitte 48, 50 auf, die mittels einer Sperreinrichtung 52 aneinander festgelegt werden können.

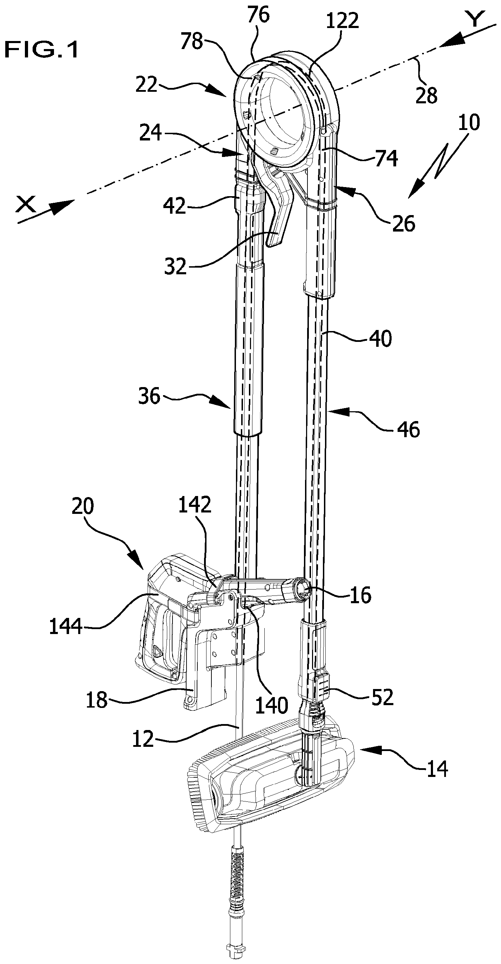

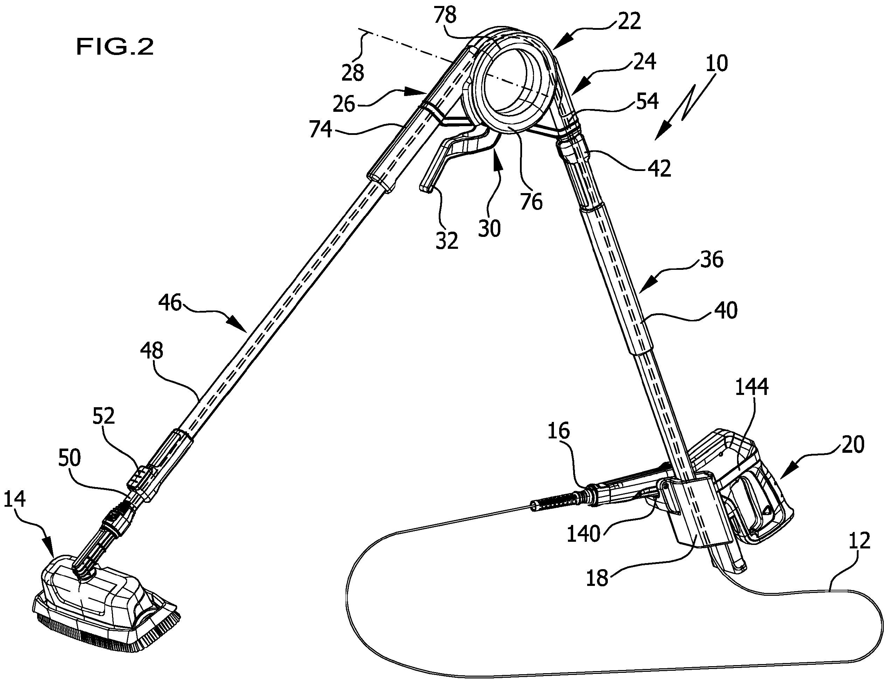

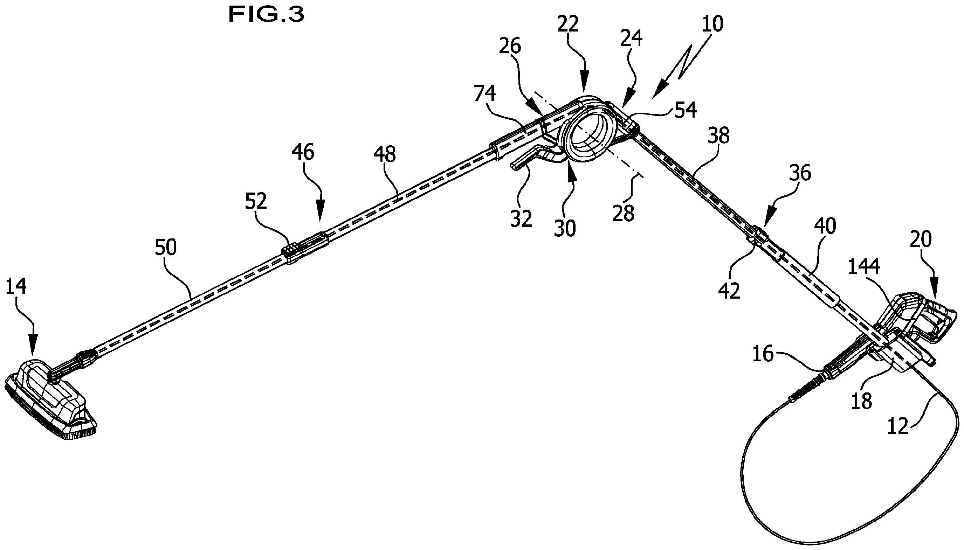

Die Figuren 1 und 2 zeigen die beiden Führungsrohre 36, 46 mit soweit wie möglich ineinander geschobenen Rohrabschnitten 38, 40 bzw. 48, 50, und in Figur 3 sind die beiden Führungsrohre 36, 46 mit maximal auseinander gezogenen Rohrabschnitten 38, 40 bzw. 48, 50 dargestellt.

Das erste Gelenkteil 24 weist einen Einlasskörper 54 auf, der den Einlassabschnitt 34 bildet. Außerdem weist das erste Gelenkteil 24 einen Verbindungskörper 56 auf, der im dargestellten Ausführungsbeispiel einstückig mit dem Einlasskörper 54 verbunden ist, so dass der Einlasskörper 54 und der Verbindungskörper 56 gemeinsam ein einteiliges Bauelement der Gelenkanordnung 22 ausbilden.

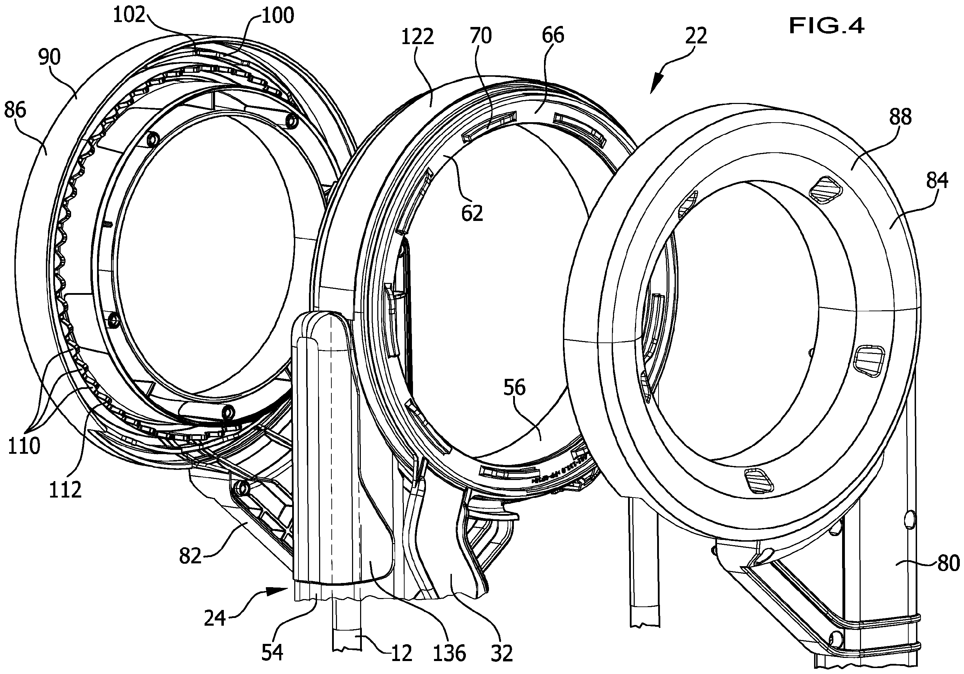

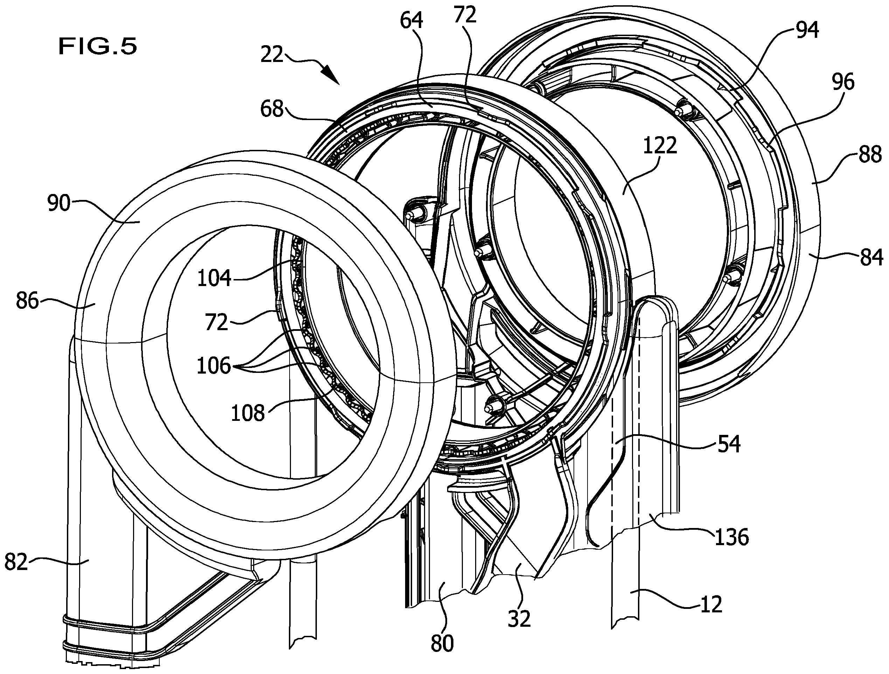

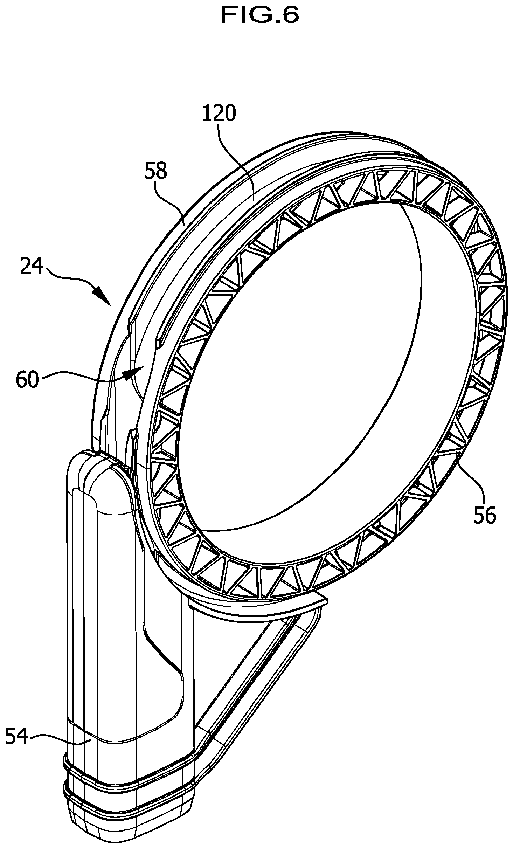

Wie insbesondere aus den Figuren 4 und 5 deutlich wird, ist der Verbindungskörper 56 ringförmig ausgestaltet und koaxial zur Gelenkachse 28 ausgerichtet. Auf seiner der Gelenkachse 28 abgewandten Außenseite 58 weist der Verbindungskörper 56 einen im Querschnitt U-förmigen Ringkanal 60 auf, in den der Einlassabschnitt 43 bezogen auf die Gelenkachse 28 tangential einmündet. Dies wird insbesondere aus Figur 6 deutlich.

Das Steuerteil 30 weist zusätzlich zum Steuerhebel 32 zwei ringförmige Steuerglieder 62, 64 auf, die ebenfalls koaxial zur Gelenkachse 28 ausgerichtet sind und die den ringförmigen Verbindungskörper 56 des ersten Gelenkteils 24 formschlüssig zwischen sich aufnehmen und relativ zum Verbindungskörper 56 um die Gelenkachse 28 gedreht werden können. Bezogen auf die Gelenkachse 28 sind die Steuerglieder 62, 64 aber in axialer Richtung relativ zum Verbindungskörper 56 nicht bewegbar. Vielmehr wird der Verbindungskörper 56 bei einer axialen Bewegung der Steuerglieder 62, 64 von den Steuergliedern 62, 64 mitgenommen, so dass die Steuerglieder 62, 64 und der Verbindungskörper 56 eine gemeinsame axiale Bewegung ausführen.

Die beiden Steuerglieder 62, 64 sind einstückig mit dem Steuerhebel 32 verbunden, so dass sie gemeinsam mit dem Steuerhebel 32 ein einteiliges Bauelement ausbilden.

Auf ihren einander abgewandten Außenseiten 66 bzw. 68 weisen die Steuerglieder 62, 64 Steuerelemente 70, 72 auf in Form axial ausgerichteter Vorsprünge, deren Bedeutung nachfolgend näher erläutert wird.

Das zweite Gelenkteil 26 weist einen Auslasskörper 74 auf, der den Auslassabschnitt 44 ausbildet. Außerdem weist das zweite Gelenkteil 26 einen Gehäusekörper 76 auf, der ein Gehäuse 78 ausbildet. Das Gehäuse 78 umgibt den Verbindungskörper 56 und die beiden Steuerglieder 62, 64.

Der Auslasskörper 74 wird von einer ersten Auslasskörperhalbschale 80 und einer zweiten Auslasskörperhalbschale 82 gebildet, und der Gehäusekörper 76 wird von einer ersten Gehäusekörperhalbschale 84 und einer zweiten Gehäusekörperhalbschale 86 gebildet. Die erste Auslasskörperhalbschale 80 ist einstückig mit der ersten Gehäusekörperhalbschale 84 verbunden, so dass die erste Auslasskörperhalbschale 80 gemeinsam mit der ersten Gehäusekörperhalbschale 84 ein einteiliges Bauelement ausbildet.

Die zweite Auslasskörperhalbschale 82 ist einstückig mit der zweiten Gehäusekörperhalbschale 86 verbunden, so dass die zweite Auslasskörperhalbschale 82 gemeinsam mit der zweiten Gehäusekörperhalbschale 86 ein einteiliges Bauelement ausbildet.

Die erste Gehäusekörperhalbschale 84 bildet ein erstes ringförmiges Gehäuseteil 88 aus, und die zweite Gehäusekörperhalbschale 86 bildet ein zweites ringförmiges Gehäuseteil 90 aus. Die beiden Gehäuseteile 88, 90 sind koaxial zur Gelenkachse 28 ausgerichtet und können miteinander verschraubt werden. Die erste Auslasskörperhalbschale 80 kann mit der zweiten Auslasskörperhalbschale 82 verschraubt werden.

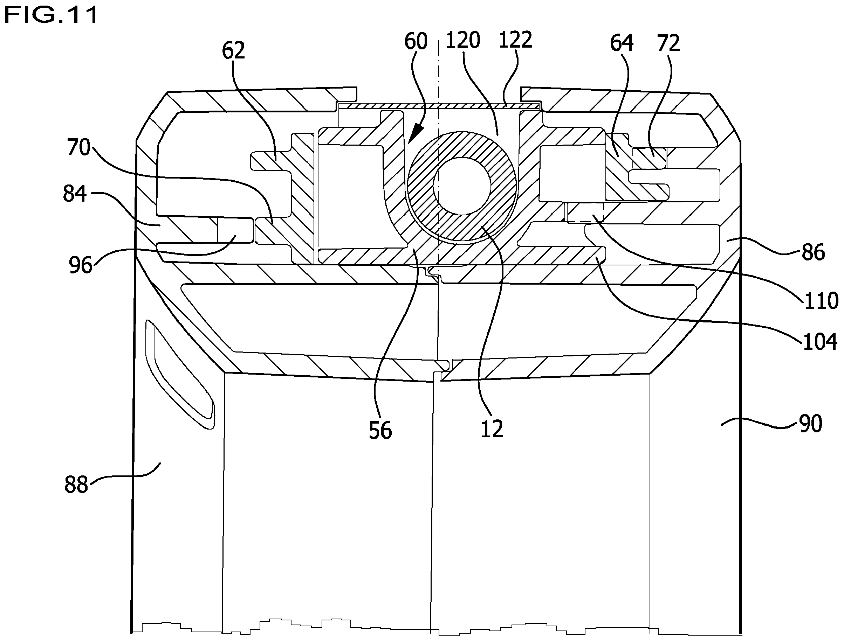

Wie insbesondere aus den Figuren 5 und 11 deutlich wird, weist das erste Gehäuseteil 88 auf seiner dem zweiten Gehäuseteil 90 zugewandten Innenseite eine erste Steuerkurve 94 auf mit einer Vielzahl von ersten Steuerflanken 96, die jeweils eine axial ausgerichtete Richtungskomponente aufweisen.

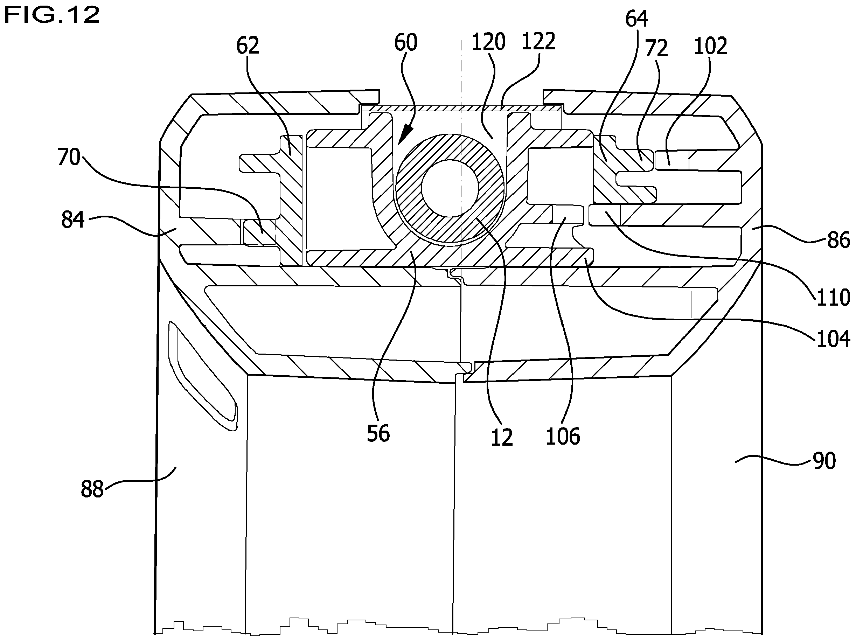

Wie insbesondere aus den Figuren 4 und 12 deutlich wird, weist das zweite Gehäuseteil 90 auf seiner dem ersten Gehäuseteil 88 zugewandten Innenseite eine zweite Steuerkurve 100 auf mit einer Vielzahl von zweiten Steuerflanken 102, die jeweils eine axial ausgerichtete Richtungskomponente aufweisen.

Der Verbindungskörper 56 weist auf seiner dem zweiten Gehäuseteil 90 zugewandten Stirnseite 104 erste Arretierungselemente 106 auf, die einen ersten Zahnkranz 108 ausbilden.

Das zweite Gehäuseteil 90 weist auf seiner dem Verbindungskörper 56 zugewandten Innenseite zweite Arretierungselemente 110 auf, die einen zweiten Zahnkranz 112 ausbilden.

Die ersten Arretierungselemente 106 können mit den zweiten Arretierungselementen 110 in Eingriff gebracht werden und einen Formschluss ausbilden.

Dies erlaubt es, die beiden Gelenkteile 24, 26 in einer gewünschten Schwenkstellung zu arretieren. Soll die Arretierung gelöst werden, so kann hierzu der Benutzer den Steuerhebel 32 ergreifen und das Steuerteil 30 relativ zum Gehäusekörper 76 in einer ersten Richtung um die Gelenkachse 28 drehen. Diese Drehbewegung hat zur Folge, dass die zweiten Steuerelemente 72 des zweiten Steuerglieds 64 an den zweiten Steuerflanken 102 der zweiten Steuerkurve 100 entlanggleiten. Dadurch wird das Steuerteil 30 und mit diesem auch das erste Gelenkteil 26 bezogen auf die Gelenkachse 28 in axialer Richtung bewegt, so dass die an der Stirnseite 104 des Verbindungskörpers 56 angeordneten ersten Arretierungselemente 106 einen Abstand zu den an der Innenseite des zweiten Gehäuseteils 90 angeordneten zweiten Arretierungselementen 110 einnehmen. Die Arretierung der beiden Gelenkteile 24, 26 ist dadurch gelöst und die Gelenkteile 24, 26 können vom Benutzer um die Gelenkachse 28 verschwenkt werden.

Gibt der Benutzer den Steuerhebel 32 frei, so wird das Steuerteil 30 unter der Wirkung eines Federelements 114 relativ zum Gehäusekörper 76 wieder in seine ursprüngliche Stellung zurückgedreht. Diese Drehbewegung hat zur Folge, dass die ersten Steuerelemente 70 des ersten Steuerglieds 62 an den ersten Steuerflanken 96 der ersten Steuerkurve 94 entlanggleiten. Dadurch wird das Steuerteil 30 und mit diesem auch das erste Gelenkteil 26 bezogen auf die Gelenkachse 28 in axialer Richtung wieder zurückbewegt, so dass die an der Stirnseite 104 des Verbindungskörpers 56 angeordneten ersten Arretierungselemente 106 mit den an der Innenseite des zweiten Gehäuseteils 90 angeordneten zweiten Arretierungselementen 110 wieder in Eingriff treten und einen Formschluss ausbilden. Die Arretierung der beiden Gelenkteile 24, 26 ist dadurch wieder aktiv.

Das Federelement 114 ist im dargestellten Ausführungsbeispiel als Schraubenfeder 116 ausgestaltet, die mit einem ersten Federende am ersten Gehäuseteil 88 und mit einem zweiten Federende am ersten Steuerglied 62 des Steuerteils 30 festgelegt ist.

Durch Verdrehen des Steuerhebels 32 relativ zum Gehäusekörper 76 kann somit der Verbindungskörper 56 bezogen auf die Gelenkachse 28 in axialer Richtung zwischen einer Raststellung und einer Freigabestellung hin und her bewegt werden. In der Raststellung des Verbindungskörpers 56 bilden die ersten Arretierungselemente 106 mit den zweiten Arretierungselementen 110 einen Formschluss aus. Dies wird insbesondere aus Figur 11 deutlich. In der Freigabestellung nehmen die ersten Arretierungselemente 106 einen Abstand zu den zweiten Arretierungselementen 110 ein. Dies wird insbesondere aus Figur 12 deutlich.

Zur Führung des Schlauchs 12 kann dieser durch die beiden Führungsrohre 36, 46 und die Gelenkanordnung 22 hindurchgeführt werden. Im Bereich zwischen dem Einlassabschnitt 34 und dem Auslassabschnitt 44 wird der Schlauch von einem Verbindungsabschnitt 120 aufgenommen, der von einem Kanalbereich des Ringkanals 60 des Verbindungskörpers 56 gebildet wird, wobei sich der Kanalbereich kreisbogenförmig vom Einlassabschnitt 34 bis zum Auslassabschnitt 44 erstreckt. Der Einlassabschnitt 34 und der Auslassabschnitt 44 sind tangential zum kreisbogenförmigen Verbindungsabschnitt ausgerichtet, das heißt der Einlassabschnitt 34 mündet in tangentialer Richtung in den Verbindungsabschnitt 120 und der Auslassabschnitt schließt sich in tangentialer Richtung an den Verbindungsabschnitt 120 an. Die Länge des kreisbogenförmigen Kanalbereichs, das heißt die Länge des Verbindungsabschnitts 120 ist davon abhängig, welche Schwenkstellung der Auslassabschnitt relativ zum Einlassabschnitt aufweist. Je kleiner der Schwenkwinkel, desto größer ist die Länge des Verbindungsabschnitts 120. In Kombination mit den beiden Führungsrohren 36, 46 bilden der Einlassabschnitt 34, der Auslassabschnitt 44 und der Verbindungsabschnitt 120 einen Führungskanal der Vorrichtung 10 aus, durch den der Schlauch 12 hindurchgeführt werden kann, wobei der Schlauch 12 im Führungskanal verschoben werden kann.

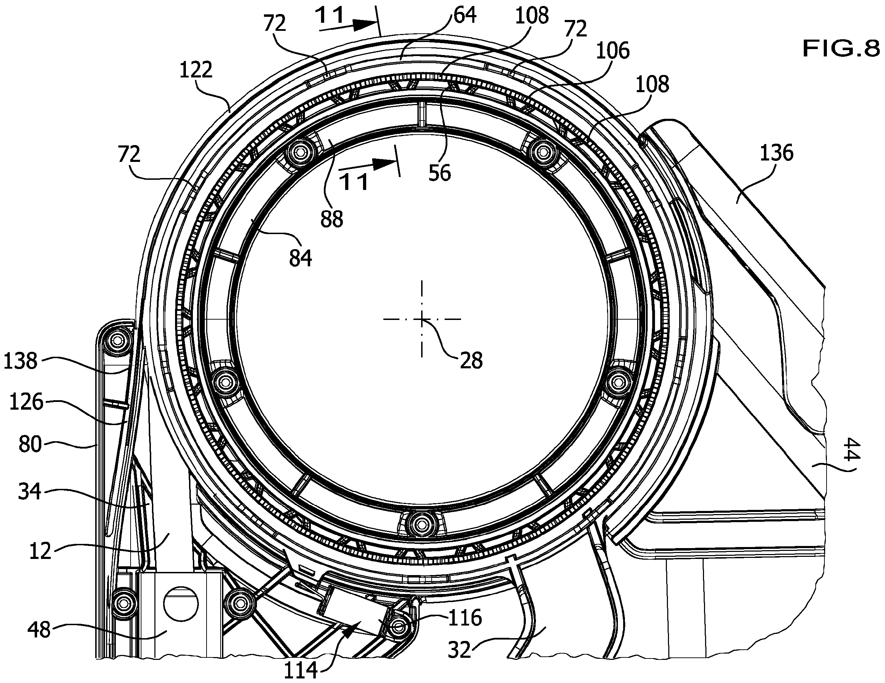

Auf seiner der Gelenkachse 28 abgewandten Außenseite wird der Verbindungsabschnitt 120 von einem elastisch verformbaren Abdeckteil 122 abgedeckt. Dies wird insbesondere aus den Figuren 4, 5 und 8 deutlich. Das Abdeckteil 122 ist streifenförmig ausgebildet und weist einen ersten Endabschnitt 124 auf, der dem Einlassabschnitt 34 des ersten Gelenkteils 24 zugewandt ist. Außerdem weist das Abdeckteil 122 einen dem ersten Endabschnitt 124 abgewandten zweiten Endabschnitt 126 auf, der dem Auslassabschnitt 44 des zweiten Gelenkteils 26 zugewandt ist.

Der erste Endabschnitt 124 ist im dargestellten Ausführungsbeispiel am ersten Gelenkteil 24 festgelegt. Der erste Endabschnitt 124 ist hierzu T-förmig ausgestaltet mit einem verschmälerten Längsstück 128 und einem sich an das Längsstück 128 in Richtung auf das erste Gelenkteil 24 anschließenden Querstück 130. Das Längsstück 128 und das Querstück 130 werden von einer Ausnehmung 132 des ersten Gelenkteils 24 aufgenommen, wobei das Querstück 130 einen Rand 134 der Ausnehmung 132 hintergreift. Die Ausnehmung 132 wird von einem Deckel 136 des ersten Gelenkteils 24 abgedeckt, der zum Einsetzen des ersten Endabschnitts 124 in die Ausnehmung 132 abgenommen werden kann.

Der zweite Endabschnitt 126 des Abdeckteils 122 taucht in eine Abdeckaufnahme 138 des zweiten Gelenkteils 26 ein, wobei er in Längsrichtung des Abdeckteils 122 frei bewegbar ist.

Je nach Schwenkstellung, die die beiden Gelenkteile 24, 26 zueinander einnehmen, kann das Abdeckteil 122 mehr oder weniger weit in die Abdeckaufnahme 138 eintauchen, so dass in jeder Schwenkstellung sichergestellt ist, dass der Verbindungsabschnitt 120 auf seiner der Gelenkachse 28 abgewandten Außenseite vom Abdeckteil 122 abgedeckt ist.

Das Abdeckteil 122 kann beispielsweise in Form eines Blechstreifens ausgestaltet sein oder beispielsweise in Form eines Kunststoffstreifens, der aus einem elastisch verformbaren Kunststoffmaterial hergestellt ist.

Der Schlauch 12 kann durch das erste Führungsrohr 36, den Einlassabschnitt 34, den Verbindungsabschnitt 120, den Auslassabschnitt 44 und das zweite Führungsrohr 46 hindurchgeführt werden. Da der Einlassabschnitt 34 ebenso wie der Auslassabschnitt 44 tangential zum Verbindungsabschnitt 120 ausgerichtet ist und der Verbindungsabschnitt 120 kreisbogenförmig um die Gelenkachse 28 herumführt, unterliegt der Schlauch 12 beim Verschwenken der beiden Gelenkteile 24, 26 sowie auch bei einer Längenänderung des ersten Führungsrohrs 36 und des zweiten Führungsrohrs 46 nur sehr geringen Reibungskräften. Die verschiebbare Lagerung des Schlauchs 12 erlaubt es somit dem Benutzer, den Schlauch 12 mittels der Vorrichtung 10 auf einfache Weise bogenförmig zu führen, wobei er bei Bedarf die Länge der Führungsrohre 36 und 46 sowie die Ausrichtung des ersten Gelenkteils 24 relativ zum zweiten Gelenkteil 26 ändern kann. Der Schlauch 12 ist innerhalb der Führungsrohre 36 und 46 ebenso wie innerhalb der Gelenkanordnung 22 vor äußeren Einwirkungen, die zu einer Beschädigung des Schlauchs 12 führen könnten, geschützt. Die Bereitstellung des Abdeckteils 122, das den Verbindungsabschnitt 120 auf seiner Außenseite abdeckt, stellt sicher, dass der Schlauch 12 nicht nur im Bereich der Führungsrohre 36, 46 sowie des Einlassabschnitts 34 und des Auslassabschnitts 44 vor äußeren Einwirkungen geschützt ist, sondern auch im Bereich des Verbindungsabschnitts 120.

Der kreisbogenförmige Verlauf des Verbindungsabschnitts 120 um die Gelenkachse 28 herum erlaubt es, den Mindestbiegeradius des Schlauchs 12 unabhängig von der Schwenkstellung, die die beiden Gelenkteile 24, 26 zueinander einnehmen, einzuhalten.

Mittels des Schlauchs 12 kann dem Reinigungskopf 14 eine unter Druck stehende Reinigungsflüssigkeit zugeführt werden. Das dem Reinigungskopf 14 abgewandte Ende des Schlauchs 12 kann hierzu an den Pistolenauslass 16 der Spritzpistole 20 angeschlossen werden. Über einen an sich bekannten und deshalb zur Erzielung einer besseren Übersicht in der Zeichnung nicht dargestellten Versorgungsschlauch kann der Spritzpistole 20 die unter Druck stehende Reinigungsflüssigkeit zugeführt werden. Mit Hilfe der Spritzpistole 20 kann der Benutzer die Abgabe der Reinigungsflüssigkeit in üblicher Weise steuern.

Die Spritzpistole 20 ist an der Pistolenhalterung 18 gehalten. Hierzu bildet die Pistolenhalterung 18 eine Pistolenaufnahme 140 aus, die im Wesentlichen wannenförmig ausgestaltet ist und an der die Spritzpistole 20 mittels Haltebänder 142, 144 festgelegt werden kann. Dies erlaubt es, die Vorrichtung 10 zusammen mit einer handelsüblichen Spritzpistole 20 zu verwenden.

## Patentansprüche

1. Vorrichtung geeignet zum Führen einer flexiblen Leitung, insbesondere eines Schlauchs (12), mit einer Gelenkanordnung (22), die ein erstes Gelenkteil (24) und ein zweites Gelenkteil (26) aufweist, wobei die beiden Gelenkteile (24, 26) relativ zueinander um eine Gelenkachse (28) verschwenkbar sind und einen Führungskanal für die flexible Leitung ausbilden, wobei der Führungskanal einen Einlassabschnitt (34), einen Auslassabschnitt (44) und einen längenveränderlichen, den Einlassabschnitt (34) mit dem Auslassabschnitt (44) verbindenden Verbindungsabschnitt (120) aufweist, **dadurch gekennzeichnet, dass** der Verbindungsabschnitt (120) auf seiner der Gelenkachse (28) abgewandten Außenseite von einem verformbaren Abdeckteil (122) abgedeckt ist, wobei das Abdeckteil (122) an zumindest einem der beiden Gelenkteile (24) bewegbar gelagert ist, und dass das erste Gelenkteil (24) einen Einlasskörper (54) und einen Verbindungskörper (56) aufweist, wobei der Einlasskörper (54) den Einlassabschnitt (34) ausbildet und wobei der Verbindungskörper (56) den Verbindungsabschnitt (120) des Führungskanals ausbildet, und dass das zweite Gelenkteil (26) einen Auslasskörper (74) und einen Gehäusekörper (76) aufweist, wobei der Auslasskörper (74) den Auslassabschnitt (44) ausbildet und wobei der Gehäusekörper (76) ein Gehäuse (78) ausbildet, in dem der Verbindungskörper (56) um die Gelenkachse (28) schwenkbar gelagert ist.

2. Vorrichtung nach Anspruch 1, **dadurch gekennzeichnet, dass** der Verbindungsabschnitt (120) bezogen auf die Gelenkachse (28) kreisbogenförmig ausgestaltet ist.

3. Vorrichtung nach Anspruch 1 oder 2, **dadurch gekennzeichnet, dass** der Einlassabschnitt (34) und/oder der Auslassabschnitt (44) bezogen auf die Gelenkachse (28) tangential zum Verbindungsabschnitt (120) ausgerichtet sind.

4. Vorrichtung nach Anspruch 1, 2 oder 3, **dadurch gekennzeichnet, dass** die beiden Gelenkteile (24, 26) in mehreren Schwenkstellungen lösbar arretierbar sind.

5. Vorrichtung nach einem der voranstehenden Ansprüche, **dadurch gekennzeichnet, dass** das Abdeckteil (122) streifenförmig ausgestaltet ist und/ oder dass das Abdeckteil (122) einen ersten Endabschnitt (124) und einen dem ersten Endabschnitt (124) abgewandten zweiten Endabschnitt (126) aufweist, wobei der erste Endabschnitt (124) an einem der beiden Gelenkteile (24, 26) ortsfest gelagert ist und der zweite Endabschnitt (126) in einer Abdeckaufnahme (138) des anderen der beiden Gelenkteile (26) verschiebbar gelagert ist.

6. Vorrichtung nach einem der voranstehenden Ansprüche, **dadurch gekennzeichnet, dass** der Verbindungskörper (56) ringförmig ausgestaltet und konzentrisch zur Gelenkachse (28) ausgerichtet ist.

7. Vorrichtung nach Anspruch 6, **dadurch gekennzeichnet, dass** der Verbindungskörper (56) einen Ringkanal (60) aufweist, der an der der Gelenkachse (28) abgewandten Außenseite des Verbindungskörpers (56) angeordnet ist, wobei ein Kanalbereich des Ringkanals (60) den Verbindungsabschnitt (120) ausbildet, vorzugsweise dass der Ringkanal (60) auf seiner der Gelenkachse (28) abgewandten Seite offen und bevorzugt im Querschnitt U-förmig ausgestaltet ist.

8. Vorrichtung nach einem der voranstehenden Ansprüche, **dadurch gekennzeichnet, dass** der Gehäusekörper (76) ein erstes Gehäuseteil (88) und ein zweites Gehäuseteil (90) aufweist, die den Verbindungskörper (56) zwischen sich aufnehmen.

9. Vorrichtung nach Anspruch 8, **dadurch gekennzeichnet, dass** zumindest eines der Folgenden gilt:
- die beiden Gehäuseteile (88, 90) bilden jeweils eine Halbschale des Gehäuses (78) aus;
- die beiden Gehäuseteile (88, 90) sind ringförmig ausgestaltet;
- die beiden Gehäuseteile (88, 90) sind lösbar miteinander verbindbar;
- das Abdeckteil (122) ist zwischen den beiden Gehäuseteilen (88, 90) angeordnet.

10. Vorrichtung nach einem der voranstehenden Ansprüche, **dadurch gekennzeichnet, dass** der Verbindungskörper (56) erste Arretierungselemente (106) aufweist und dass der Gehäusekörper (76) zweite Arretierungselemente (110) aufweist, wobei der Verbindungskörper (56) relativ zum Gehäusekörper (76) zwischen einer Arretierungsstellung und einer Freigabestellung hin und her bewegbar ist, wobei die ersten Arretierungselemente (106) in der Arretierungsstellung mit den zweiten Arretierungselementen (110) in Eingriff stehen und in der Freigabestellung zu den zweiten Arretierungselementen (110) beabstandet sind.

11. Vorrichtung nach Anspruch 10, **dadurch gekennzeichnet, dass** der Verbindungskörper (56) mittels eines Federelements (114) in seine Arretierungsstellung vorgespannt ist, und/oder dass der Verbindungskörper (56) bezogen auf die Gelenkachse (28) in axialer Richtung zwischen der Arretierungsstellung und der Freigabestellung hin und her bewegbar ist.

12. Vorrichtung nach Anspruch 10 oder 11, **dadurch gekennzeichnet, dass** die Vorrichtung (10) ein Steuerteil (30) aufweist und der Verbindungskörper (56) durch Betätigen des Steuerteils (30) zwischen der Arretierungsstellung und der Freigabestellung hin und her bewegbar ist.

13. Vorrichtung nach Anspruch 12, **dadurch gekennzeichnet, dass** das Steuerteil (30) relativ zum Gehäusekörper (76) um die Gelenkachse (28) drehbar und axialer Richtung bewegbar ist, wobei das Steuerteil (30) zwei koaxial zur Gelenkachse (28) ausgerichtete ringförmige Steuerglieder (62, 64) aufweist, die den Verbindungskörper (56) zwischen sich aufnehmen und die an ihren dem Verbindungskörper (56) abgewandten Seiten (66, 68) Steuerelemente (70, 72) aufweisen, wobei die Steuerelemente (70, 72) zur Erzielung einer gemeinsamen axialen Bewegung des Steuerteils (30) und des Verbindungskörpers (56) mit am Gehäusekörper angeordneten Steuerkurven (94, 100) zusammenwirken, und vorzugsweise dass die beiden Steuerglieder (62, 64) über einen vom Benutzer ergreifbaren Steuerhebel (32) miteinander verbunden sind.

14. Vorrichtung nach einem der voranstehenden Ansprüche, **dadurch gekennzeichnet, dass** an den Einlassabschnitt (34) der Gelenkanordnung (22) ein Führungsrohr (36) angeschlossen ist, durch das die flexible Leitung hindurchführbar ist und das zumindest zwei teleskopartig ineinander schiebbare und ausziehbare Rohrabschnitte (38, 40) aufweist, und vorzugsweise dass an dem an den Einlassabschnitt (34) angeschlossenen Führungsrohr (36) eine Pistolenhalterung (18) angeordnet ist zum Halten einer Spritzpistole (20), an die ein Ende der flexiblen Leitung anschließbar ist.

15. Vorrichtung nach einem der voranstehenden Ansprüche, **dadurch gekennzeichnet, dass** an den Auslassabschnitt (44) der Gelenkanordnung (22) ein Führungsrohr (46) angeschlossen ist, durch das die flexible Leitung hindurchführbar ist und das zumindest zwei teleskopartig ineinander schiebbare und ausziehbare Rohrabschnitte (48, 50) aufweist, und vorzugsweise dass an das an den Auslassabschnitt (44) angeschlossene Führungsrohr (46) ein Reinigungskopf (14) zum Reinigen einer Oberfläche anschließbar ist, dem über die flexible Leitung unter Druck stehende Reinigungsflüssigkeit zuführbar ist.

## Claims

1. Apparatus suited for guiding a flexible conduit, in particular a hose (12), with a joint arrangement (22), which comprises a first joint part (24) and a second joint part (26), wherein the two joint parts (24, 26) are pivotable relative to one another about a pivot axis (28) and form a guide channel for the flexible conduit, wherein the guide channel comprises an inlet portion (34), an outlet portion (44), and a connecting portion (120) that is variable in length connecting the inlet portion (34) to the outlet portion (44), **characterized in that** the connecting portion (120) is covered on its outside facing away from the joint axis (28) by a deformable cover part (122), wherein the cover part (122) is movably mounted on at least one of the two joint parts (24), and **in that** the first joint part (24) comprises an inlet body (54) and a connecting body (56), the inlet body (54) forming the inlet portion (34) and the connecting body (56) forming the connecting portion (120) of the guide channel, and **in that** the second joint part (26) comprises an outlet body (74) and a housing body (76), the outlet body (74) forming the outlet portion (44) and the housing body (76) forming a housing (78) in which the connecting body (56) is mounted so as to be pivotable about the joint axis (28).

2. Apparatus in accordance with Claim 1, **characterized in that** the connecting portion (120) is of arcuate configuration with respect to the joint axis (28).

3. Apparatus in accordance with Claim 1 or 2, **characterized in that** the inlet portion (34) and/or the outlet portion (44) are aligned tangentially to the connecting portion (120) with respect to the joint axis (28).

4. Apparatus in accordance with Claim 1, 2, or 3, **characterized in that** the two joint parts (24, 26) are releasably lockable in a plurality of pivot positions.

5. Apparatus in accordance with any one of the preceding Claims, **characterized in that** the cover part (122) is of strip-shaped configuration, and/or **in that** the cover part (122) comprises a first end portion (124) and a second end portion (126) facing away from the first end portion (124), wherein the first end portion (124) is fixedly mounted on one of the two joint parts (24, 26) and the second end portion (126) is displaceably mounted in a cover receptacle (138) of the other of the two joint parts (26).

6. Apparatus in accordance with any one of the preceding Claims, **characterized in that** the connecting body (56) is of annular configuration and is aligned concentrically to the joint axis (28).

7. Apparatus in accordance with Claim 6, **characterized in that** the connecting body (56) comprises an annular channel (60), which is arranged on the outside of the connecting body (56) facing away from the joint axis (28), wherein a channel region of the annular channel (60) forms the connecting portion (120), preferably **in that** the annular channel (60) is open on its side facing away from the joint axis (28) and is preferably of U-shaped configuration in cross section.

8. Apparatus in accordance with any one of the preceding Claims, **characterized in that** the housing body (76) comprises a first housing part (88) and a second housing part (90), which accommodate the connecting body (56) between them.

9. Apparatus in accordance with Claim 8, **characterized in that** at least one of the following applies:
- the two housing parts (88, 90) each form a half-shell of the housing (78);
- the two housing parts (88, 90) are of annular configuration;
- the two housing parts (88, 90) are releasably connectable to one another;
- the cover part (122) is arranged between the two housing parts (88, 90).

10. Apparatus in accordance with any one of the preceding Claims, **characterized in that** the connecting body (56) comprises first locking elements (106) and **in that** the housing body (76) comprises second locking elements (110), wherein the connecting body (56) is movable back and forth relative to the housing body (76) between a locking position and a release position, wherein the first locking elements (106) in the locking position are in engagement with the second locking elements (110) and in the release position are at a distance from the second locking elements (110).

11. Apparatus in accordance with Claim 10, **characterized in that** the connecting body (56) is biased into its locking position by means of a spring element (114), and/or **in that** the connecting body (56) is movable back and forth (28) in the axial direction with respect to the joint axis (28) between the locking position and the release position.

12. Apparatus in accordance with Claim 10 or 11, **characterized in that** the apparatus (10) comprises a control part (30) and the connecting body (56) is movable back and forth between the locking position and the release position by actuating the control part (30).

13. Apparatus in accordance with Claim 12, **characterized in that** the control part (30) is rotatable about the joint axis (28) and movable in the axial direction relative to the housing body (76), wherein the control part (30) comprises two annular control members (62, 64) aligned coaxially to the joint axis (28), which accommodate the connecting body (56) between them and which comprise control elements (70, 72) on their sides (66, 68) facing away from the connecting body (56), wherein the control elements (70, 72) cooperate with control curves (94, 100) arranged on the housing body for achieving a common axial movement of the control part (30) and the connecting body (56), and preferably **in that** the two control members (62, 64) are connected to one another by way of a control lever (32) that can be gripped by the user.

14. Apparatus in accordance with any one of the preceding Claims, **characterized in that** connected to the inlet portion (34) of the joint arrangement (22) is a guide tube (36) through which the flexible conduit is guidable and which comprises at least two tube portions (38, 40) that are slidable into and extendable out of one another in a telescoping manner, and preferably **in that** arranged on the guide tube (36) connected to the inlet portion (34) is a gun holder (18) for holding a spray gun (20) to which an end of the flexible conduit is connectable.

15. Apparatus in accordance with any one of the preceding Claims, **characterized in that** connected to the outlet portion (44) of the joint arrangement (22) is a guide tube (46) through which the flexible conduit is guidable and which comprises at least two tube portions (48, 50) that are slidable into and extendable out of one another in a telescoping manner, and preferably **in that** a cleaning head (14) for cleaning a surface is connectable to the guide tube (46) connected to the outlet portion (44), to which cleaning head (14) pressurized cleaning liquid is suppliable by way of the flexible conduit.

## Revendications

1. Dispositif convenant pour guider une conduite flexible, en particulier un tuyau (12), avec un agencement d'articulation (22) présentant une première partie d'articulation (24) et une seconde partie d'articulation (26), dans lequel les deux parties d'articulation (24, 26) peuvent pivoter l'une par rapport à l'autre autour d'un axe d'articulation (28) et forment un canal de guidage pour la conduite flexible, dans lequel le canal de guidage présente une section d'entrée (34), une section de sortie (44) et une section de liaison (120) de longueur modifiable reliant la section d'entrée (34) à la section de sortie (44), **caractérisé en ce que** la section de liaison (120) est recouverte sur son côté extérieur opposé à l'axe d'articulation (28) par une partie de couverture (122) déformable, dans lequel la partie de couverture (122) est montée de manière mobile au moins au niveau d'une des deux parties d'articulation (24), et
**en ce que** la première partie d'articulation (24) présente un corps d'entrée (54) et un corps de liaison (56), dans lequel le corps d'entrée (54) forme la section d'entrée (34) et dans lequel le corps de liaison (56) forme la section de liaison (120) du canal de guidage, et **en ce que** la seconde partie d'articulation (26) présente un corps de sortie (74) et un corps de logement (76), dans lequel le corps de sortie (74) forme la section de sortie (44) et dans lequel le corps de logement (76) forme un logement (78) au sein duquel le corps de liaison (56) est monté de manière à pouvoir pivoter autour de l'axe d'articulation (28).

2. Dispositif selon la revendication 1, **caractérisé en ce que** la section de liaison (120) est conçue en forme d'arc de cercle par rapport à l'axe d'articulation (28).

3. Dispositif selon la revendication 1 ou 2, **caractérisé en ce que** la section d'entrée (34) et/ou la section de sortie (44) sont orientées par rapport à l'axe d'articulation (28) de manière tangentielle à la section de liaison (120).

4. Dispositif selon la revendication 1, 2 ou 3, **caractérisé en ce que** les deux parties d'articulation (24, 26) peuvent être bloquées de manière amovible dans plusieurs positions de pivotement.

5. Dispositif selon l'une quelconque des revendications précédentes, **caractérisé en ce que** la partie de couverture (122) est conçue en forme de bande et/ou **en ce que** la partie de couverture (122) présente une première section d'extrémité (124) et une seconde section d'extrémité (126) opposée à la première section d'extrémité (124), dans lequel la première section d'extrémité (124) est montée de manière fixe au niveau d'une des deux parties d'articulation (24, 26) et la seconde section d'extrémité (126) est montée de manière coulissante dans un logement de couverture (138) de l'autre des deux parties d'articulation (26).

6. Dispositif selon l'une quelconque des revendications précédentes, **caractérisé en ce que** le corps de liaison (56) est conçu en forme d'anneau et est orienté de manière concentrique par rapport à l'axe d'articulation (28).

7. Dispositif selon la revendication 6, **caractérisé en ce que** le corps de liaison (56) présente un canal annulaire (60) agencé sur le côté extérieur, opposé à l'axe d'articulation (28), du corps de liaison (56), dans lequel une région de canal du canal annulaire (60) forme la section de liaison (120), de manière préférée **en ce que** le canal annulaire (60) est conçu pour être ouvert sur son côté opposé à l'axe d'articulation (28) et de manière préférée pour être en forme de U en coupe transversale.

8. Dispositif selon l'une quelconque des revendications précédentes, **caractérisé en ce que** le corps de logement (76) présente une première partie de logement (88) et une seconde partie de logement (90) qui accueillent entre elles le corps de liaison (56).

9. Dispositif selon la revendication 8, **caractérisé en ce qu'**au moins une des caractéristiques ci-dessous s'applique :
- les deux parties de logement (88, 90) forment respectivement une demi-coque du logement (78) ;
- les deux parties de logement (88, 90) sont conçues pour être de forme annulaire ;
- les deux parties de logement (88, 90) peuvent être reliées l'une à l'autre de manière amovible ;
- la partie de couverture (122) est agencée entre les deux parties de logement (88, 90).

10. Dispositif selon l'une quelconque des revendications précédentes, **caractérisé en ce que** le corps de liaison (56) présente des premiers éléments de blocage (106) et **en ce que** le corps de logement (76) présente des seconds éléments de blocage (110), dans lequel le corps de liaison (56) est mobile par rapport au corps de logement (76) et peut aller et venir entre une position de blocage et une position de libération, dans lequel les premiers éléments de blocage (106) sont en prise avec les seconds éléments de blocage (110) dans la position de blocage et sont à distance des seconds éléments de blocage (110) dans la position de libération.

11. Dispositif selon la revendication 10, **caractérisé en ce que** le corps de liaison (56) est précontraint dans sa position de blocage au moyen d'un élément formant ressort (114), et/ou **en ce que** le corps de liaison (56) est mobile par rapport à l'axe d'articulation (28) dans la direction axiale et peut aller et venir entre la position de blocage et la position de libération.

12. Dispositif selon la revendication 10 ou 11, **caractérisé en ce que** le dispositif (10) présente une partie de commande (30) et le corps de liaison (56) peut aller et venir entre la position de blocage et la position de libération grâce à l'actionnement de la partie de commande (30).

13. Dispositif selon la revendication 12, **caractérisé en ce que** la partie de commande (30) est mobile par rapport au corps de logement (76) dans la direction axiale et peut tourner autour de l'axe d'articulation (28), dans lequel la partie de commande (30) présente deux organes de commande (62, 64) annulaires orientés de manière coaxiale par rapport à l'axe d'articulation (28) et accueillant entre eux le corps de liaison (56) et présentant des éléments de commande (70, 72) sur leurs côtés (66, 68) opposés au corps de liaison (56), dans lequel les éléments de commande (70, 72) coopèrent avec des courbes de commande (94, 100) agencées sur le corps de logement afin d'obtenir un mouvement axial commun de la partie de commande (30) et du corps de liaison (56), et de manière préférée **en ce que** les deux organes de commande (62, 64) sont reliés l'un à l'autre par un levier de commande (32) pouvant être saisi par l'utilisateur.

14. Dispositif selon l'une quelconque des revendications précédentes, **caractérisé en ce qu'**un tube de guidage (36), à travers lequel il est possible de faire passer la conduite flexible et qui présente au moins deux sections de tube (38, 40) pouvant être glissées l'une dans l'autre et extraites de manière télescopique, est raccordé à la section d'entrée (34) de l'agencement d'articulation (22) et de manière préférée **en ce qu'**un support de pistolet (18) est agencé au niveau du tube de guidage (36) raccordé à la section d'entrée (34) afin de retenir un pistolet de pulvérisation (20) auquel peut être raccordée une extrémité de la conduite flexible.

15. Dispositif selon l'une quelconque des revendications précédentes, **caractérisé en ce qu'**un tube de guidage (46), à travers lequel il est possible de faire passer la conduite flexible et qui présente au moins deux sections de tube (48, 50) pouvant être glissées l'une dans l'autre et extraites de manière télescopique, est raccordé à la section de sortie (44) de l'agencement d'articulation (22), et **en ce que** de manière préférée une tête de nettoyage (14), vers laquelle du liquide de nettoyage sous pression peut être acheminé par l'intermédiaire de la conduite flexible, peut être raccordée au tube de guidage (46) raccordé à la section de sortie (44) afin de nettoyer une surface.
